(19) Europäisches Patentamt / European Patent Office / Office européen des brevets

(11) **EP 3 826 203 B1**

(12) **EUROPEAN PATENT SPECIFICATION**

(45) Date of publication and mention
of the grant of the patent:
**15.03.2023 Bulletin 2023/11**

(21) Application number: **18929861.5**

(22) Date of filing: **15.08.2018**

(51) International Patent Classification (IPC):
*G06N 3/04* *(2006.01)*      *G06N 3/08* *(2006.01)*
*G06N 5/00* *(2006.01)*      *G06N 7/00* *(2006.01)*
*H04L 27/00* *(2006.01)*      *H04L 27/26* *(2006.01)*

(52) Cooperative Patent Classification (CPC):
**H04L 27/2666; H04L 27/0006; H04L 27/2663;**
**H04L 27/2678;** G06N 3/044; G06N 3/045;
G06N 3/048; G06N 3/084; G06N 5/01; G06N 7/01;
G06N 20/10; H04B 17/382; Y02D 30/70

(86) International application number:
**PCT/JP2018/030370**

(87) International publication number:
**WO 2020/035920 (20.02.2020 Gazette 2020/08)**

(54) **SIGNAL DETECTION DEVICE, SIGNAL DETECTING METHOD, CONTROL CIRCUIT AND COMPUTER READABLE STORAGE MEDIUM**

SIGNALERKENNUNGSVORRICHTUNG, SIGNALERKENNUNGSVERFAHREN, STEUERUNGSSCHALTUNG UND COMPUTERLESBARES SPEICHERMEDIUM

DISPOSITIF ET PROCÉDÉ DE DÉTECTION DE SIGNAUX, CIRCUIT DE CONTRÔLE ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.05.2021 Bulletin 2021/21**

(73) Proprietor: **Mitsubishi Electric Corporation Tokyo 100-8310 (JP)**

(72) Inventor: **OHASHI, Akinori Tokyo 100-8310 (JP)**

(74) Representative: **Pfenning, Meinig & Partner mbB Patent- und Rechtsanwälte Theresienhöhe 11a 80339 München (DE)**

(56) References cited:
| | |
|---|---|
| **EP-A2- 2 343 842** | **WO-A1-2018/136785** |
| **JP-A- 2008 079 280** | **JP-A- 2010 233 095** |
| **JP-A- 2011 512 742** | **JP-A- 2013 198 117** |
| **JP-A- 2014 039 287** | **US-A1- 2013 208 609** |

**Description**

Field

The present invention relates to a signal detecting device and a signal detecting method for detecting signals in a radio communication system.

Background

Because of shortage of frequency bands that can be allocated, there have recently been demands for radio systems in which same frequencies are shared. One example of such radio systems is a cognitive radio system constituted by a plurality of radio systems. In a cognitive radio system, while a certain radio system is communicating, another radio system does not communicate in some cases so as not to interfere with the certain radio system. In addition, while a certain radio system is not communicating, another radio system may communicate. In this case, a certain radio system needs to accurately obtain the communication condition of another radio system, and a signal detection technology for detecting whether or not a signal is present is therefore necessary.

Patent Literature 1 discloses a signal detecting device that calculates a cyclic autocorrelation function as cyclostationarity representing cyclic repetitive components of a signal when a received signal has a level equal to or lower than a threshold, and determines whether or not a signal is present by using the obtained cyclic autocorrelation function.

WO 2018/136785 A1 discloses systems, methods and apparatus for automatic signal detection in an RF environment. An apparatus comprises at least one receiver and at least one processor coupled with at least one memory. The apparatus is at the edge of a communication network. The apparatus sweeps the RF environment in a predetermined period and extracts at least one time-frequency feature. The apparatus creates a knowledge map comprising the at least one time-frequency feature. The apparatus includes a parameter module which may determine one or more signal parameters for any identified signals, such as center frequency, bandwidth, power, number of detected signals, frequency peak, peak power, average power, signal duration, etc.

Citation List

Patent Literature

Patent Literature 1: Japanese Patent No. 4531581

Summary

Technical Problem

In the cognitive radio system as described in Patent Literature 1, a period during which a certain radio system stops communicating is set, and another radio system detects a signal during this period in some cases. In such a case, when the signal detection takes a long period, the period during which the certain radio system stops communication becomes longer, which lowers the communication efficiency. It is therefore necessary to improve the accuracy of signal detection to shorten the period for signal detection.

The present invention has been made in view of the above, and an object thereof is to provide a signal detecting device capable of improving the accuracy of signal detection.

Solution to Problem

The present invention is as defined in the appended set of claims. To solve the above problem and achieve an object, a signal detecting device according to the present invention includes: a first calculation unit to calculate a peak-to-average power ratio as first feature data by using a received signal; a second calculation unit to calculate by using the received signal, as second feature data, a cyclic autocorrelation function, a spectral correlation function, a signal power, an amplitude correlation, and a phase difference; and a signal determining unit to determine whether or not a signal to be detected is present in the received signal by machine learning by using the first feature data and the second feature data.

Advantageous Effects of Invention

A signal detecting device according to the present invention produces an effect of improving the accuracy of signal detection.

Brief Description of Drawings

FIG. 1 is a diagram illustrating functional blocks of a signal detecting device according to an embodiment.

FIG. 2 is a diagram illustrating a control circuit according to the embodiment.

FIG. 3 is a chart illustrating a frequency spectrum of a signal obtained by bandlimiting filtering according to the embodiment.

FIG. 4 is a graph illustrating a spectral correlation function of an OFDM signal according to the embodiment.

FIG. 5 is a table illustrating combinations of a frequency at which a peak of an SCF in FIG. 4 occurs and a cyclic frequency according to the embodiment.

FIG. 6 is a diagram illustrating an example of a configuration when a signal determining unit according to the embodiment uses a neural network as a discriminator.

Description of Embodiments

A signal detecting device and a signal detecting method according to an embodiment of the present invention will be described in detail below with reference to the drawings. Note that the present invention is not limited to the embodiment.

Embodiment.

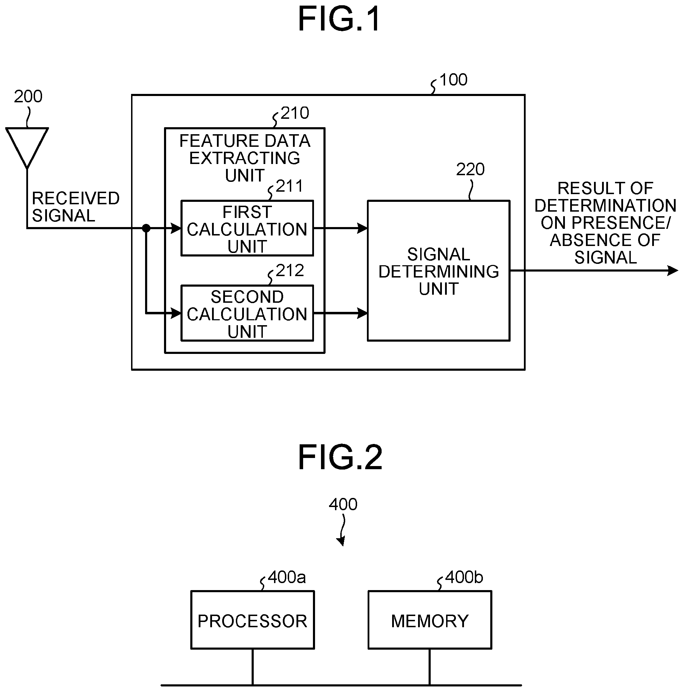

FIG. 1 is a diagram illustrating functional blocks of a signal detecting device according to an embodiment. A signal detecting device 100 is equipped in a base station, a mobile station, or both of a base station and a mobile station, to receive signals from other systems and signals transmitted from the present system which includes the signal detecting device 100. The signal detecting device 100 includes an antenna 200, a feature data extracting unit 210, and signal determining unit 220. The antenna 200 receives signals to be detected. The feature data extracting unit 210 extracts feature data by using the received signals. The signal determining unit 220 determines whether or not a signal to be detected is present by machine learning using the feature data detected by the feature data extracting unit 210.

The feature data extracting unit 210 and the signal determining unit 220 are implemented by processing circuitry that is electronic circuitry for carrying out respective processes.

The processing circuitry may be dedicated hardware, or may be a control circuit including a memory and a central processing unit (CPU) that executes programs stored in the memory. Note that the memory is nonvolatile or volatile semiconductor memory such as a random access memory (RAM), a read only memory (ROM) or a flash memory, a magnetic disk, or an optical disk, for example. In a case where the processing circuitry is a control circuit including a CPU, the control circuit is a control circuit 400 having a configuration illustrated in FIG. 2, for example.

As illustrated in FIG. 2, the control circuit 400 includes a processor 400a, which is a CPU, and a memory 400b. In a case of implementation by the control circuit 400 illustrated in FIG. 2, the processor 400a reads and executes programs, which correspond to the respective processes, stored in the memory 400b. Furthermore, the memory 400b is also used as a temporary memory in processes performed by the processor 400a.

The feature data extracting unit 210 includes a first calculation unit 211 and a second calculation unit 212. The first calculation unit 211 calculates a peak-to-average power ratio, which is one of the feature data, by using received signals. The peak-to-average power ratio is also referred to as first feature data. The peak-to-average power ratio is one of information indicating the feature of a signal, and when an orthogonal frequency division multiplexing (OFDM) signal is to be detected, for example, the peak-to-average power ratio in an environment in which OFDM signals are present has a property of being higher than the peak-to-average power ratio in an environment without OFDM signals in which only noise is present. This is because an OFDM signal is a multiplexed signal of a plurality of subcarriers modulated with different data. Thus, an environment in which signals are present can be distinguished from an environment in which no signals are present by using the peak-to-average power ratio. In this manner, the peak-to-average power ratio can be used as feature data of a signal for signal detection. The first calculation unit 211 calculates the peak-to-average power ratio C by using the following formula on an input received signal.

[Formula 1]

$$C = \frac{\max\limits_{0 \le i \le K-1}\{p[i]\}}{(1/K) \times \sum_{i=0}^{K-1} p[i]} \quad \cdots (1)$$

$$p[i] = |x[i]|^2$$

In the formula (1), x[i] represents a received signal at a sampling timing i. p[i] represents a power of the received signal at the sampling timing i. K represents observation time of the received signal. |a| represents an absolute value of a complex number a. Note that a is x[i], etc.

The second calculation unit 212 calculates feature data of the input received signal other than the peak-to-average power ratio. Specifically, the feature data calculated by the second calculation unit 212 are a cyclic autocorrelation function, a spectral correlation function (SCF), a signal power, an amplitude correlation, and a phase difference. The feature data calculated by the second calculation unit 212 are also referred to as second feature data.

The cyclic autocorrelation function is calculated by the following formula.

[Formula 2]

$$R_x^\alpha(v) = \frac{1}{K} \sum_{i=0}^{K-1} x[i] x^*[i+v] e^{-j2\pi\alpha i T_s} \quad \cdots (2)$$

In the formula (2), v represents a lag parameter. $\alpha$ represents a cyclic frequency. $T_s$ represents a sampling period, a* represents a complex conjugate of the complex number a.

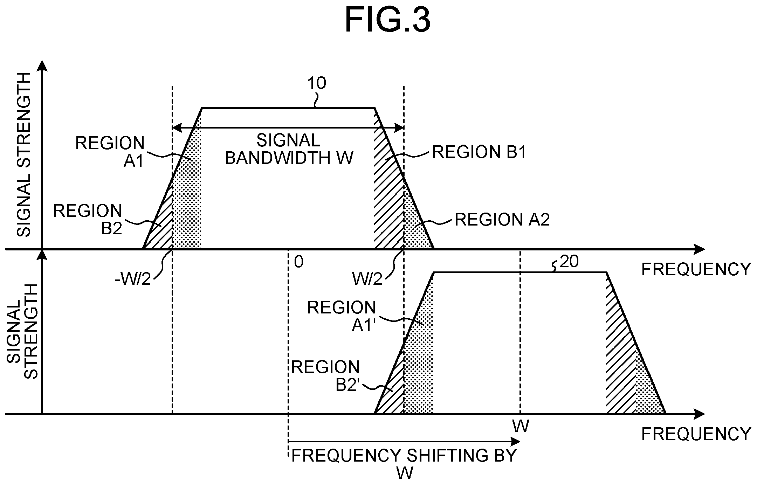

A specific example for the second calculation unit 212 calculating the cyclic autocorrelation function as feature data will be described in detail. FIG. 3 is a chart illustrating a frequency spectrum of a signal obtained by bandlimiting filtering according to the embodiment. In FIG. 3, the vertical axis represents signal strength. The horizontal axis represents frequency. The frequency spectrum of a signal does not fall within the signal bandwidth W when the signal is bandlimited by a bandlimiting filter. In this case, a region A2 of a signal 10, which is a signal before frequency shifting, has the same signal component as a region A1 of the signal 10. A region B2 of the signal 10 has the same signal component as a region B1 of the signal 10. With use of this characteristic, when a signal 20, which is a signal obtained by bandlimiting filtering, is assumed to be a signal with frequency shifted by the signal bandwidth W from the signal 10, the region A2 of the signal 10 and a region A1' of the signal 20 have the same signal component as each other. Similarly, the region B1 of the signal 10 and a region B2' of the signal 20 have the same signal component as each other. Note that, because the cyclic autocorrelation function has a correlation value of a signal with frequency shifted by the cyclic frequency $\alpha$ when v=0 is set in the formula (2), the cyclic autocorrelation function has a correlation peak when v=0 and $\alpha$=W. In the present embodiment, the correlation peak value of the cyclic autocorrelation function is calculated as feature data. In addition, when a signal to be detected is an OFDM signal, the cyclic autocorrelation function has peaks because of the cyclic property provided by guard intervals (GIs). Specifically, in the formula (2), the peaks occur when v=$\pm N_d$ and $\alpha$=m/$N_S T_S$. Note that $N_d$ represents the data length of an OFDM symbol. $N_S$ represents the symbol length of the OFDM symbol. m represents an integer. When an OFDM signal is to be detected, the peak values are calculated as feature data of the cyclic autocorrelation function.

The spectral correlation function can be calculated by the following formula.

[Formula 3]

$$S_x^\alpha(f) = \sum_{v=0}^{Q-1} R(v) e^{-j2\pi f v T_s} \quad \cdots (3)$$

In the formula (3), f represents frequency. Q represents the number of observed lag parameters. In addition, the formula (3) can be converted into the following formula by causing the number of observed samples and the number of observed lag parameters to asymptotically approach infinite values.

[Formula 4]

$$S_x^\alpha(f) = \frac{1}{M}\sum_{v=0}^{M-1}X[f]X^*[f-\alpha]$$

$$\cdots (4)$$

$$X[f] = \sum_{i=0}^{N_f-1}X[i]e^{-j2\pi f\,iT_s}$$

In the formula (4), X[f] represents a signal, that is, a frequency spectrum, the signal being obtained by Fourier transform of the received signal x[i]. M represents the number of observed symbols. $N_f$ represents a fast Fourier transform (FFT) size. According to the formula (4), the spectral correlation function is a correlation value between X[f] and X[f-$\alpha$] that is obtained by frequency shifting by the cyclic frequency $\alpha$.

A specific example for calculating the spectral correlation function as feature data will be described. Assume that a signal to be detected is an OFDM signal, and that pilot signals are inserted in specified subcarriers. Here, assume that the GI length is 16 and that the FFT length is 64. In addition, the OFDM signal, in which nulls are allocated to subcarrier numbers -32 to -27, 0, 27 to 31; pilots are allocated to subcarrier numbers -24, -8, 8, and 24; and data are allocated to the remaining subcarrier numbers among the subcarrier numbers -32 to 31, will be described.

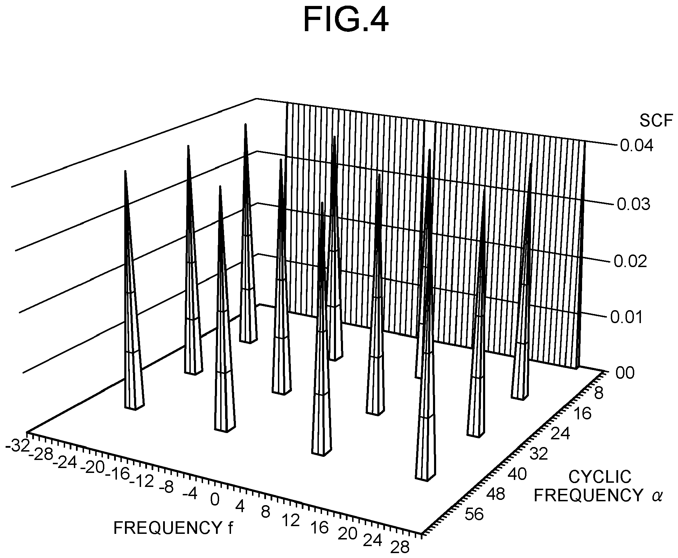

FIG. 4 is a graph illustrating the spectral correlation function of the OFDM signal according to the embodiment. The SCF has peaks at specific positions because of the pilots. The peaks occur at the specific positions because the SCF is a correlation value between the frequency spectrum X[f] and the frequency spectrum X[f-$\alpha$] that is obtained by frequency shifting by the cyclic frequency $\alpha$. Accordingly, the SCF becomes a correlation between pilots if a frequency of a pilot and a frequency that is obtained by frequency shifting a frequency of another pilot by the cyclic frequency $\alpha$ coincide to each other.

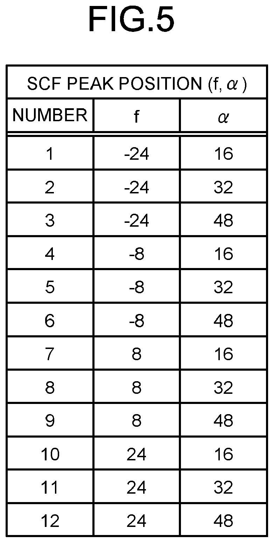

FIG. 5 is a table illustrating combinations of the frequency f at which a peak of the SCF in FIG. 4 occurs and the cyclic frequency $\alpha$ according to the embodiment. FIG. 5 includes numbers that indicate the number of SCF peak positions, the frequency f, and the cyclic frequency $\alpha$. According to FIG. 5, there are twelve SCF peak positions. The number of SCF peak positions corresponds to the number of permutations of two pilots that are correlated out of four pilots inserted in the frequency direction. Note that the correlation value is the same regardless of the order of two frequency spectra that are correlated. For example, when correlation between a complex number "a" and a complex number "b" is assumed, the correlation between the complex number "a" and the complex number "b" and the correlation between the complex number "b" and the complex number "a" have the same value. Thus, six SCF peak positions are sufficient among the twelve SCF peak positions illustrated in FIG. 5. Specifically, a total of six including the numbers 4, 7, 8, 10, 11, and 12 in FIG. 5. The feature data of the spectral correlation function may be the SCFs at the SCF peak positions determined by the pilots of the OFDM signal. Alternatively, the SCFs at all the positions excluding combinations of the same correlation values may be the feature data regardless of the SCF peak positions.

The signal power can be calculated by the following formula.

[Formula 5]

$$P = \frac{1}{K}\sum_{i=0}^{K-1}p[i] \qquad \cdots (5)$$

In addition, when a signal to be detected is an OFDM signal, a subcarrier power can be calculated as the signal power by the following formula.

[Formula 6]

$$P[f] = \frac{1}{M}\sum_{v=0}^{M-1}|x[f]|^2 \qquad \cdots (6)$$

When the subcarrier power is used as the feature data of the signal power, the power of all subcarriers may be used as the feature data, for example. Alternatively, power of subcarriers other than the subcarriers into which nulls are inserted may be used as the feature data.

The amplitude correlation can be calculated by the following formula.

[Formula 7]

$$C[m] = \frac{E\left[r\left[i - \frac{K}{2}\right]r[i + m - K]\right]}{\sqrt{E\left[r^2\left[i - \frac{K}{2}\right]\right]}\sqrt{E[r^2[i + m - K]]}}, m = 0, \ldots, K-1 \qquad \cdots (7)$$

$$r[i] = \sqrt{|x[i]|^2}$$

In the formula (7), E[a] represents an average value of the complex number a. A range of i for obtaining the average is i=0 to K-1. In addition, r[i] represents the amplitude of the received signal x[i]. When the amplitude correlation is calculated as the feature data, the amplitude correlation C[m] in the formula (7) may be used without any change, for example. Alternatively, a statistic of the amplitude correlation in the formula (7) may be used as the feature data. Examples of the statistic include an average and a variance. The phase difference can be calculated by the following formula.

[Formula 8]

$$D[i] = \arg\left\{x[i] \cdot x^*[i + 1]\right\} \qquad \cdots (8)$$

In the formula (8), arg{a} represents the phase of the complex number a. When the phase difference is calculated as the feature data, the phase difference D[i] in the formula (8) may be used without any change, for example. Alternatively, a statistic of the phase difference in the formula (8) may be used as the feature data. The statistic is an average or a variance, for example.

The signal determining unit 220 determines whether or not a signal to be detected is present in received signals by using two or more pieces of feature data extracted by the feature data extracting unit 210 using a learned discriminator, that is, the two or more pieces of feature data are the peak-to-average power ratio and at least one of: the cyclic autocorrelation function, the spectral correlation function, the signal power, the amplitude correlation, and the phase difference. For the discriminator, any learner such as a neural network, a decision tree, a Bayes classifier, or a support vector machine can be used, for example. Neural networks include a convolution neural network (CNN), a recurrent neural network (RNN), a residual network (ResNet), and the like. In addition, neural networks similarly include deep learning employing deeper layers of a neural network.

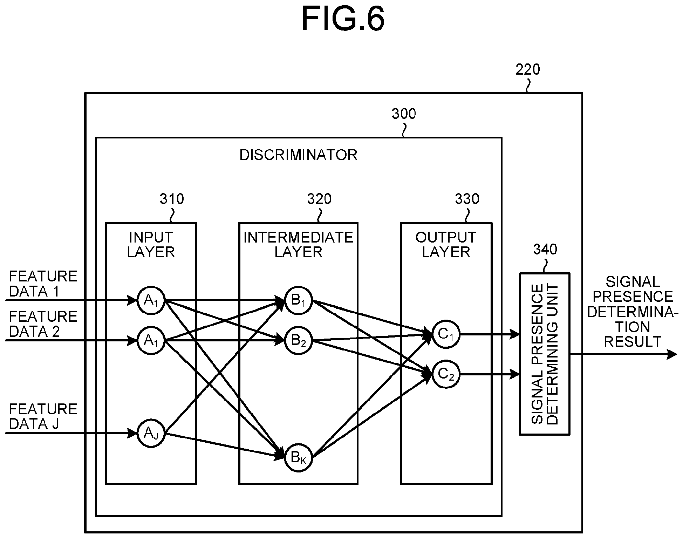

FIG. 6 is a diagram illustrating an example of a configuration when the signal determining unit 220 according to the embodiment uses a neural network as the discriminator. The signal determining unit 220 includes a discriminator 300 and a signal presence determining unit 340. The discriminator 300 is a fully-connected neural network. In addition, the discriminator 300 is constituted by three layers, which are an input layer 310, an intermediate layer 320, and an output layer 330. The discriminator 300 receives feature data J (J=1 to S; S is the number of feature data) extracted by the feature data extracting unit 210 each input to input nodes $A_J$ (J=1 to S) in the input layer 310 of the discriminator. Weighting factors $W_{J,K}$ associated with the input nodes $A_J$, and intermediate nodes $B_K$ (K=1 to M) of the intermediate layer 320, are added to the feature data J input to the input nodes $A_J$, and the weighted feature data are input to the intermediate nodes $B_K$. In this process, bias values $T_K$ associated with the intermediate nodes $B_K$ are added to the values input to the intermediate nodes $B_K$ from the input nodes, and values of the intermediate nodes $B_K$ are thus obtained. An activating function such as a sigmoid function or a rectified linear unit (ReLU) function is applied to the values of the intermediate nodes $B_K$, weighting factors $V_{K,L}$ associated with the intermediate nodes $B_K$ and output nodes $C_L$ (L=1,2) of the output layer 330 are then added to values obtained through the activation function, and the weighted values are input to the output nodes $C_L$. In this process, bias values $U_L$ associated with the output nodes $C_L$ are added to the values input to the output nodes $C_L$ from the intermediate nodes, and values of the output nodes $C_L$ are thus obtained. The values of the output nodes $C_L$ are input to the signal presence determining unit 340, which outputs a result of determination on whether or not a signal is present. Note that, when assuming that the output node $C_1$ corresponds to presence of the signal and the output node $C_2$ corresponds to absence of the signal, the signal presence determining unit 340 outputs the presence of the signal (1 as an output value, for example) when the value of $C_1 \geq$ the value of $C_2$,

**EP 3 826 203 B1**

or outputs the absence of the signal (0 as an output value, for example) when the value of $C_1$ < the value of $C_2$.

The weighting factors $W_{J,K}$ and $V_{K,L}$ and the bias values $T_K$ and $U_L$ are determined by performing a learning process by using training data, that is, the feature data J and a correct value of the presence/absence of a signal. For the learning process, a known technology such as backpropagation is used. Specifically, in a method for determining the weighting factors and the bias values, backpropagation or the like is used so as to reduce errors of the values of the output nodes output by the discriminator with respect to the correct values of signal presence/absence (the value of $C_1$=1 and the value of $C_2$=0 when the signal is present, and the value of $C_1$=0 and the value of $C_2$=1 when the signal is absent, for example).

As described above, in the present embodiment, the signal detecting device 100 inputs, in addition to the peak-to-average power ratio, any one or more of the cyclic autocorrelation function, the spectral correlation function, the signal power, the amplitude correlation, and the phase difference as feature data to the discriminator 300, thereby enabling determination on whether or not a signal is present by machine learning. The signal detecting device 100 can therefore improve the accuracy of detecting a signal to be detected in received signals.

The configurations presented in the embodiment above are examples of the present invention, and can be combined with other known technologies or can be partly omitted or modified without departing from the scope of the present invention.

Reference Signs List

10, 20 signal; 100 signal detecting device; 200 antenna; 210 feature data extracting unit; 211 first calculation unit; 212 second calculation unit; 220 signal determining unit; 300 discriminator; 310 input layer; 320 intermediate layer; 330 output layer; 340 signal presence determining unit; 400 control circuit; 400a processor; 400b memory.

**Claims**

1. A signal detecting device (100) comprising:

   a first calculation unit (211) to calculate a peak-to-average power ratio as first feature data by using a received signal;
   a second calculation unit (212) to calculate, as second feature data, a cyclic autocorrelation function, a spectral correlation function, a signal power, an amplitude correlation, and a phase difference, by using the received signal; and
   a signal determining unit (220) to determine whether or not a signal to be detected is present in the received signal by machine learning by using the first feature data and the second feature data;
   wherein the cyclic autocorrelation function is calculated by the following formula:

   $$R_x^\alpha(v) = \frac{1}{K}\sum_{i=0}^{K-1} x[i]x^*[i+v]e^{-j2\pi\alpha iT_s} \quad ;$$

   where x[i] represents a received signal at a sampling timing i, K represents observation time of the received signal, v represents a lag parameter, $\alpha$ represents a cyclic frequency, $T_S$ represents a sampling period, x[i]* represents a complex conjugate of the complex number x[i].

2. The signal detecting device (100) according to claim 1, wherein

   the signal determining unit (220)
   is adapted to determine whether or not the signal to be detected is present by using a learned discriminator (300).

3. The signal detecting device (100) according to claim 2, wherein

   the learned discriminator (300)
   is adapted to use training data on which a learning process is performed using the first feature data and the second feature data.

4. The signal detecting device (100) according to claim 2 or 3, wherein

7

the discriminator (300)
is constituted by any one of a neural network, a decision tree, a Bayes classifier, and a support vector machine.

5. The signal detecting device (100) according to any one of claims 1 to 4, wherein

the signal to be detected
is an orthogonal frequency division multiplexing signal.

6. A signal detecting method for determining whether or not a signal to be detected is present from a received signal, the signal detecting method comprising:

a first step of calculating a peak-to-average power ratio as first feature data by using the received signal;
a second step of calculating by using the received signal, as second feature data, a cyclic autocorrelation function, a spectral correlation function, a signal power, an amplitude correlation, and a phase difference; and
a third step of determining whether or not the signal to be detected is present in the received signal by machine learning by using the first feature data and the second feature data;
wherein the cyclic autocorrelation function is calculated by the following formula:

$$R_x^{\alpha}(v) = \frac{1}{K} \sum_{i=0}^{K-1} x[i] x^*[i+v] e^{-j2\pi\alpha i T_s} ;$$

where x[i] represents a received signal at a sampling timing i, K represents observation time of the received signal, v represents a lag parameter, $\alpha$ represents a cyclic frequency, $T_S$ represents a sampling period, x[i]* represents a complex conjugate of the complex number x[i].

7. The signal detecting method according to claim 6, wherein

in the third step,
a learned discriminator (300) is used to determine whether or not the signal to be detected is present.

8. The signal detecting method according to claim 7, wherein

the learned discriminator (300)
uses training data on which a learning process is performed using the first feature data and the second feature data.

9. The signal detecting method according to claim 7 or 8, wherein

the discriminator (300)
is constituted by any one of a neural network, a decision tree, a Bayes classifier, and a support vector machine.

10. The signal detecting method according to any one of claims 6 to 9, wherein

the signal to be detected
is an orthogonal frequency division multiplexing signal.

11. A control circuit (400) comprising a processor (400a)configured to perform the method steps defined in any one of claims 6 to 10.

12. A computer readable storage medium (400b) that stores a program for controlling a signal detecting device, the program includes instructions that cause the signal detecting device to perform:

first calculating of a peak-to-average power ratio as first feature data by using a received signal;
second calculating of, as second feature data, a cyclic autocorrelation function, a spectral correlation function, a signal power, an amplitude correlation, and a phase difference, by using the received signal; and
determining whether or not a signal to be detected is present in the received signal by machine learning by using the first feature data and the second feature data;
wherein the cyclic autocorrelation function is calculated by the following formula:

$$R_x^{\alpha}(v) = \frac{1}{K}\sum_{i=0}^{K-1} x[i]x^*[i+v]e^{-j2\pi\alpha iT_s}$$

;

where x[i] represents a received signal at a sampling timing i, K represents observation time of the received signal, v represents a lag parameter, $\alpha$ represents a cyclic frequency, $T_S$ represents a sampling period, x[i]* represents a complex conjugate of the complex number x[i].

**Patentansprüche**

1.  Signalerfassungseinrichtung (100), umfassend:

    eine erste Berechnungseinheit (211) zum Berechnen eines Spitze-zu-Durchschnitt-Leistungsverhältnisses als erste Merkmalsdaten unter Verwendung eines empfangenen Signals;
    eine zweite Berechnungseinheit (212) zum Berechnen einer zyklischen Autokorrelationsfunktion, einer spektralen Korrelationsfunktion, einer Signalleistung, einer Amplitudenkorrelation und einer Phasendifferenz als zweite Merkmalsdaten unter Verwendung des empfangenen Signals; und
    eine Signalbestimmungseinheit (220) zum Bestimmen, ob ein zu erfassendes Signal in dem empfangenen Signal vorhanden ist oder nicht, durch maschinelles Lernen unter Verwendung der ersten Merkmalsdaten und der zweiten Merkmalsdaten;
    wobei die zyklische Autokorrelationsfunktion nach der folgenden Formel berechnet wird:

    $$R_x^{\alpha}(v) = \frac{1}{K}\sum_{i=0}^{K-1} x[i]x^*[i+v]e^{-j2\pi\alpha iT_s}$$

    wo x[i] ein empfangenes Signal zu einem Abtastzeitpunkt i darstellt, K die Beobachtungszeit des empfangenen Signals darstellt, v einen Verzögerungsparameter darstellt, a eine zyklische Frequenz darstellt, $T_s$ eine Abtastperiode darstellt, x[i]* eine komplex Konjugierte der komplexen Zahl x[i] darstellt.

2.  Signalerfassungseinrichtung (100) nach Anspruch 1, wobei

    die Signalbestimmungseinheit (220)
    ausgelegt ist, unter Verwendung eines angelernten Diskriminators (300) zu bestimmen, ob das zu erfassende Signal vorhanden ist oder nicht.

3.  Signalerfassungseinrichtung (100) nach Anspruch 2, wobei
    der angelernte Diskriminator (300) ausgelegt ist, Trainingsdaten zu verwenden, an denen ein Lernprozess unter Verwendung der ersten Merkmalsdaten und der zweiten Merkmalsdaten durchgeführt wird.

4.  Signalerfassungseinrichtung (100) nach Anspruch 2 oder 3, wobei
    der Diskriminator (300) durch eines von einem neuronalen Netz, einem Entscheidungsbaum, einem Bayes-Klassifikator und einer Support-Vector-Machine gebildet wird.

5.  Signalerfassungseinrichtung (100) nach einem der Ansprüche 1 bis 4, wobei
    das zu erfassende Signal ein orthogonales Frequenzmultiplexsignal ist.

6.  Signalerfassungsverfahren zum Bestimmen, aus einem empfangenen Signal, ob ein zu erfassendes Signal vorhanden ist oder nicht, wobei das Signalerfassungsverfahren umfasst:

    einen ersten Schritt des Berechnens eines Spitze-zu-Durchschnitt-Leistungsverhältnisses als erste Merkmalsdaten unter Verwendung eines empfangenen Signals;

einen zweiten Schritt des Berechnens einer zyklischen Autokorrelationsfunktion, einer spektralen Korrelationsfunktion, einer Signalleistung, einer Amplitudenkorrelation und einer Phasendifferenz unter Verwendung des empfangenen Signals als zweite Merkmalsdaten; und
einen dritten Schritt des Bestimmens, ob ein zu erfassendes Signal in dem empfangenen Signal vorhanden ist oder nicht, durch maschinelles Lernen unter Verwendung der ersten Merkmalsdaten und der zweiten Merkmalsdaten;
wobei die zyklische Autokorrelationsfunktion nach der folgenden Formel berechnet wird:

$$R_x^{\alpha}(v) = \frac{1}{K} \sum_{i=0}^{K-1} x[i]x^*[i+v]e^{-j2\pi\alpha i T_s}$$

wo x[i] ein empfangenes Signal zu einem Abtastzeitpunkt i darstellt, K die Beobachtungszeit des empfangenen Signals darstellt, v einen Verzögerungsparameter darstellt, a eine zyklische Frequenz darstellt, $T_s$ eine Abtastperiode darstellt, x[i]* eine komplex Konjugierte der komplexen Zahl x[i] darstellt.

7. Signalerfassungsverfahren nach Anspruch 6, wobei
im dritten Schritt ein angelernter Diskriminator (300) verwendet wird, um zu bestimmen, ob das zu erfassende Signal vorhanden ist oder nicht.

8. Signalerfassungsverfahren nach Anspruch 7, wobei
der angelernte Diskriminator (300) Trainingsdaten verwendet, an denen ein Lernprozess unter Verwendung der ersten Merkmalsdaten und der zweiten Merkmalsdaten durchgeführt wird.

9. Signalerfassungsverfahren nach Anspruch 7 oder 8, wobei
der Diskriminator (300) durch eines von einem neuronalen Netz, einem Entscheidungsbaum, einem Bayes-Klassifikator und einer Support-Vector-Machine gebildet wird.

10. Signalerfassungsverfahren nach einem der Ansprüche 6 bis 9, wobei
das zu erfassende Signal ein orthogonales Frequenzmultiplexsignal ist.

11. Steuerschaltung (400), umfassend einen Prozessor (400a), der zur Durchführung der in einem der Ansprüche 6 bis 10 definierten Verfahrensschritte eingerichtet ist.

12. Computerlesbares Speichermedium (400b), das ein Programm zum Steuern einer Signalerfassungseinrichtung speichert, wobei das Programm Anweisungen aufweist, die die Signalerfassungseinrichtung veranlassen zum Durchführen:

einer ersten Berechnung eines Spitze-zu-Durchschnitt-Leistungsverhältnisses als erste Merkmalsdaten unter Verwendung eines empfangenen Signals;
einer zweiten Berechnung einer zyklischen Autokorrelationsfunktion, einer spektralen Korrelationsfunktion, einer Signalleistung, einer Amplitudenkorrelation und einer Phasendifferenz unter Verwendung des empfangenen Signals als zweite Merkmalsdaten; und
des Bestimmens, ob ein zu erfassendes Signal in dem empfangenen Signal vorhanden ist oder nicht, durch maschinelles Lernen unter Verwendung der ersten Merkmalsdaten und der zweiten Merkmalsdaten;
wobei die zyklische Autokorrelationsfunktion nach der folgenden Formel berechnet wird:

$$R_x^{\alpha}(v) = \frac{1}{K} \sum_{i=0}^{K-1} x[i]x^*[i+v]e^{-j2\pi\alpha i T_s}$$

wo x[i] ein empfangenes Signal zu einem Abtastzeitpunkt i darstellt, K die Beobachtungszeit des empfangenen Signals darstellt, v einen Verzögerungsparameter darstellt, a eine zyklische Frequenz darstellt, $T_s$ eine Abtastperiode darstellt, x[i]* eine komplex Konjugierte der komplexen Zahl x[i] darstellt.

## EP 3 826 203 B1

**Revendications**

1. Dispositif de détection de signal (100), comprenant :

   une première unité de calcul (211) pour calculer un rapport puissance de crête/puissance moyenne en tant que premières données caractéristiques en utilisant un signal reçu ;
   une deuxième unité de calcul (212) pour calculer, en tant que deuxièmes données caractéristiques, une fonction d'autocorrélation cyclique, une fonction de corrélation spectrale, une puissance de signal, une corrélation d'amplitude et une différence de phase, en utilisant le signal reçu ; et
   une unité de détermination de signal (220) pour déterminer si un signal à détecter est présent ou non dans le signal reçu par apprentissage automatique en utilisant les premières données caractéristiques et les deuxièmes données caractéristiques ;
   dans lequel la fonction d'autocorrélation cyclique est calculée par la formule suivante :

$$R_x^\alpha(v) = \frac{1}{K}\sum_{i=0}^{K-1} x[i]x^*[i+v]e^{-j2\pi\alpha iT_s}$$

   où x[i] représente un signal reçu à un temps d'échantillonnage i, K représente le temps d'observation du signal reçu, v représente un paramètre de décalage, a représente une fréquence cyclique, $T_s$ représente une période d'échantillonnage, x[i]* représente un conjugué complexe du nombre complexe x[i].

2. Dispositif de détection de signal (100) selon la revendication 1, dans lequel

   l'unité de détermination de signal (220)
   est adaptée pour déterminer si le signal à détecter est présent ou non en utilisant un discriminateur instruit (300).

3. Dispositif de détection de signal (100) selon la revendication 2, dans lequel
   le discriminateur instruit(300) est adapté pour utiliser des données d'apprentissage sur lesquelles un processus d'apprentissage est exécuté en utilisant les premières données caractéristiques et les deuxièmes données caractéristiques.

4. Dispositif de détection de signal (100) selon la revendication 2 ou 3, dans lequel
   le discriminateur (300) est constitué de l'un quelconque des éléments suivants : un réseau neuronal, un arbre de décision, un classificateur de Bayes et une machine à vecteurs de support.

5. Dispositif de détection de signal (100) selon l'une quelconque des revendications 1 à 4, dans lequel
   le signal à détecter est un signal de multiplexage par répartition orthogonale de la fréquence.

6. Procédé de détection de signal pour déterminer si un signal à détecter est présent ou non à partir d'un signal reçu, le procédé de détection de signal comprenant :

   une première étape consistant à calculer un rapport puissance de crête/puissance moyenne en tant que premières données caractéristiques en utilisant le signal reçu ;
   une deuxième étape consistant à calculer, en utilisant le signal reçu, en tant que deuxièmes données caractéristiques, une fonction d'autocorrélation cyclique, une fonction de corrélation spectrale, une puissance de signal, une corrélation d'amplitude et une différence de phase ; et
   une troisième étape consistant à déterminer si le signal à détecter est présent ou non dans le signal reçu par apprentissage automatique en utilisant les premières données caractéristiques et les deuxièmes données caractéristiques ;
   dans lequel la fonction d'autocorrélation cyclique est calculée par la formule suivante :

$$R_x^\alpha(v) = \frac{1}{K}\sum_{i=0}^{K-1} x[i]x^*[i+v]e^{-j2\pi\alpha iT_s}$$

où x[i] représente un signal reçu à un temps d'échantillonnage i, K représente le temps d'observation du signal reçu, v représente un paramètre de décalage, a représente une fréquence cyclique, $T_s$ représente une période d'échantillonnage, x[i]* représente un conjugué complexe du nombre complexe x[i].

7. Procédé de détection de signal selon la revendication 6, dans lequel
dans la troisième étape, un discriminateur instruit (300) est utilisé pour déterminer si le signal à détecter est présent ou non.

8. Procédé de détection de signal selon la revendication 7, dans lequel
le discriminateur instruit (300) utilise des données d'apprentissage sur lesquelles un processus d'apprentissage est exécuté en utilisant les premières données caractéristiques et les deuxièmes données caractéristiques.

9. Procédé de détection de signal selon la revendication 7 ou 8, dans lequel
le discriminateur (300) est constitué de l'un quelconque des éléments suivants : un réseau neuronal, un arbre de décision, un classificateur de Bayes et une machine à vecteurs de support.

10. Procédé de détection de signal selon l'une quelconque des revendications 6 à 9, dans lequel
le signal à détecter est un signal de multiplexage par répartition orthogonale de la fréquence.

11. Circuit de commande (400) comprenant un processeur (400a) configuré pour exécuter les étapes du procédé définies dans l'une quelconque des revendications 6 à 10.

12. Support de stockage lisible par ordinateur (400b) qui stocke un programme pour commander un dispositif de détection de signal, le programme comprenant des instructions qui amènent le dispositif de détection de signal à exécuter :

un premier calcul d'un rapport puissance de crête/puissance moyenne en tant que premières données caractéristiques en utilisant un signal reçu ;
un deuxième calcul, en tant que secondes données caractéristiques, d'une fonction d'autocorrélation cyclique, d'une fonction de corrélation spectrale, d'une puissance de signal, d'une corrélation d'amplitude et d'une différence de phase, en utilisant le signal reçu ; et
déterminer si un signal à détecter est présent ou non dans le signal reçu par apprentissage automatique en utilisant les premières données caractéristiques et les deuxièmes données caractéristiques ;
dans lequel la fonction d'autocorrélation cyclique est calculée par la formule suivante :

$$R_x^\alpha(v) = \frac{1}{K} \sum_{i=0}^{K-1} x[i] x^*[i+v] e^{-j2\pi\alpha iT_s}$$

où x[i] représente un signal reçu à un temps d'échantillonnage i, K représente le temps d'observation du signal reçu, v représente un paramètre de décalage, a représente une fréquence cyclique, $T_s$ représente une période d'échantillonnage, x[i]* représente un conjugué complexe du nombre complexe x[i].

# FIG.1

# FIG.2

# FIG.3

# FIG.4

# FIG.5

| SCF PEAK POSITION (f, $\alpha$ ) | | |
|---|---|---|
| NUMBER | f | $\alpha$ |
| 1 | -24 | 16 |
| 2 | -24 | 32 |
| 3 | -24 | 48 |
| 4 | -8 | 16 |
| 5 | -8 | 32 |
| 6 | -8 | 48 |
| 7 | 8 | 16 |
| 8 | 8 | 32 |
| 9 | 8 | 48 |
| 10 | 24 | 16 |
| 11 | 24 | 32 |
| 12 | 24 | 48 |

# FIG.6

220

300

DISCRIMINATOR

310        320        330

| INPUT LAYER | INTERMEDIATE LAYER | OUTPUT LAYER |

FEATURE DATA 1

FEATURE DATA 2

FEATURE DATA J

$A_1$   $A_1$   $A_J$

$B_1$   $B_2$   $B_K$

$C_1$   $C_2$

340

SIGNAL PRESENCE DETERMINING UNIT

SIGNAL PRESENCE DETERMINA-TION RESULT

**EP 3 826 203 B1**

**REFERENCES CITED IN THE DESCRIPTION**

**Patent documents cited in the description**

- WO 2018136785 A1
- JP 4531581 B